# EUROPÄISCHE PATENTSCHRIFT

(11) **EP 1 213 265 B1**
(45) Veröffentlichungstag und Bekanntmachung des Hinweises auf die Patenterteilung: **18.08.2004**
(21) Anmeldenummer: 01126873.7
(22) Anmeldetag: 12.11.2001
(51) Int. Cl.: C02F 3/12

(54) **Verfahren zum Betreiben einer Kläranlage sowie eine Kläranlage mit einer Klarwasser-Entnahmepumpe zur Durchführung des Verfahrens**
Process for operating a waste water treatment plant and waste treatment plant with a clarified water extractor pump for carrying out the process
Procédé de fonctionnement d'une station d'épuration des eaux ainsi qu'une station d'épuration des eaux avec une pompe d'eau clarifiée pour la mise en oeuvre du procédé

(30) Priorität: 18.11.2000 DE 10057378
(43) Veröffentlichungstag der Anmeldung: 12.06.2002
(73) Patentinhaber: Baumann, Markus, 32602 Vlotho (DE)
(72) Erfinder: Baumann, Markus, 32602 Vlotho (DE)
(74) Vertreter: TER MEER STEINMEISTER & PARTNER GbR

(56) Entgegenhaltungen:
- EP-A- 1 031 540
- GB-A- 1 320 759
- GB-A- 1 490 769
- US-A- 4 002 561
- US-A- 5 205 936

## Beschreibung

Die Erfindung betrifft ein Verfahren zum Betreiben einer Kläranlage, insbesondere Einbecken-Kläranlage, in der nach einer Belebungsphase eine Absetz- und Nachklärphase stattfindet, mit einer Klarwasser-Entnahmepumpe zur Entnahme des Klarwassers im Anschluß an die Absetz- und Nachklärphase.

Ferner betrifft die Erfindung eine Kläranlage mit einer Klarwasser-Entnahmepumpe zur Durchführung dieses Verfahrens.

Bei einer Einbecken-Kläranlage der genannten Art, wie sie beispielsweise in der EP 1 031 540 A1 des Anmelders beschrieben wird, tritt während der Belebungsphase Belebtschlamm in die als Tauchpumpe ausgebildete Klarwasser-Entnahmepumpe und zumindest in einen Teil des auf der Druckseite der Klarwasser-Entnahmepumpe anschließenden Druckrohres ein. Belebtschlamm kann sich innerhalb der Klarwasser-Entnahmepumpe ablagern und kann sich daher nicht am Boden des Beckens absetzen, in dem sich die Klarwasser-Entnahmepumpe befindet. Besonders bedeutsam ist diese Problematik bei Einbecken-Kläranlagen, in denen die Belebungsphase, in der Sauerstoff zugeführt wird, und die anschließende Absetz- und Nachklärphase in ein- und demselben Behälter stattfinden. Hier findet in den Belebungsphasen eine intensive Durchmischung und Belüftung des Beckeninhalts statt, bei der Belebtschlamm auch in die Pumpenkammer der Klarwasser-Entnahmepumpe eindringt.

Wird nun am Ende der Absetz- und Nachklärphase Klarwasser abgepumpt, so tritt zunächst das in der Pumpenkammer gefangene, verschmutzte Wasser aus. Dadurch wird die Klarwasserqualität beeinträchtigt.

Der Erfindung liegt daher die Aufgabe zugrunde, ein Verfahren der eingangs genannten Art und eine Klarwasser-Entnahmepumpe zur Durchführung dieses Verfahrens zu schaffen, die es gestatten, die Klarwasserqualität auch zu Beginn des Abpumpvorganges zu verbessern.

Diese Aufgabe wird bei einem Verfahren der eingangs genannten Art dadurch gelöst, daß die Klarwasser-Entnahmepumpe, insbesondere während der Absetzund Nachklärphase wenigstens für einen kurzen Pumpenstoß eingeschaltet wird, so daß die Pumpe Wasser in einen ansteigenden Abschnitt einer auf der Druckseite der Pumpe anschließenden Druckleitung pumpt, das nach dem Pumpenstoß durch die Pumpe in das Becken der Anlage zurückläuft.

Eine Kläranlage mit einer Klarwasser-Entnahmepumpe der obigen Art ist dadurch gekennzeichnet, daß die Klarwasser-Entnahmepumpe derart steuerbar ist, daß insbesondere während der Absetz- und Nachklärphase wenigstens durch einen kurzen Pumpenstoß Wasser in einen ansteigenden Abschnitt einer auf der Druckseite der Pumpe anschließenden Druckleitung gepumpt wird, das nach dem Pumpenstoß durch die Pumpe in das Becken der Anlage zurückläuft.

Vorzugsweise finden mehrere kurze Pumpenstöße insbesondere während des Absetzvorgangs statt. Die Pumpenstöße werden so kurz gehalten, daß nur der ansteigende Abschnitt der Druckleitung mit Wasser gefüllt wird und das Wasser nicht aus der Anlage austritt.

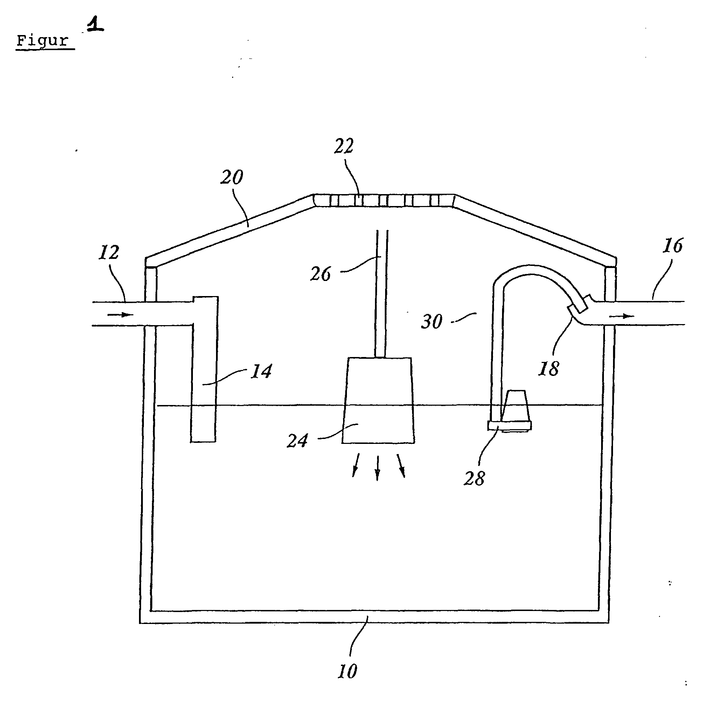

Im folgenden wird ein bevorzugtes Ausführungsbeispiel anhand der beigefügten Zeichnung näher erläutert.

Die einzige Figur ist ein schematischer senkrechter Schnitt durch eine Einbekken-Kläranlage.

Die erfindungsgemäße Kläranlage befindet sich innerhalb eines Beckens 10, das beispielsweise aus Betonfertigteilen, insbesondere Betonringen, bestehen kann. In das Becken tritt ein Zulaufrohr ein, das in der Zeichnung mit 12 bezeichnet ist und das innerhalb des Beckens 10 in ein senkrechtes Tauchrohr 14 übergeht. das unter den Wasserspiegel innerhalb des Beckens eintaucht. Auf der gegenüberliegenden Seite wird die Wand des Beckens 10 von einem Austrittsrohr 16 für gereinigtes Wasser durchdrungen, dem innerhalb des Beckens 10 ein Winkelstück 18 vorgeschaltet ist.

Das Becken 10 wird nach oben durch einen Dom 20 in der Form eines stumpfen Kegels abgeschlossen, in dessen Zentrum sich ein Deckel mit Belüftungsöffnungen 22 befindet. Der Deckel kann für Überwachungs- und Wartungsarbeiten geöffnet werden.

Innerhalb des Beckens 10 ist ein Tauchbelüfter 24 in geeigneter, nicht näher dargestellter Weise aufgehängt. Dieser Tauchbelüfter 24 richtet einen kräftigen Wasser-Luft-Strom in Richtung der angegebenen Pfeile zum Boden des Beckens, so daß das gesamte Schmutzwasser bewegt und belüftet wird.

Die Luftzufuhr erfolgt über einen Schlauch 26. Seitlich neben dem Tauchbelüfter 24 befindet sich eine Klarwasser-Entnahmepumpe 28 in der Form einer Tauchpumpe. Auf der oberen Seite der Klarwasser-Entnahmepumpe 28 schließt eine Druckleitung 30 an, die zunächst senkrecht ansteigt und sodann in einem Bogen in das Austrittsrohr 16 einläuft. Über diese Druckleitung 30 wird das gereinigte Klarwasser am Ende der Absetz- und Nachklärphasen abgegeben.

Die Klarwasser-Entnahmepumpe ist derart steuerbar, daß sie am Ende der Absetz- und Nachklärphasen Klarwasser über die Druckleitung 30 und das Austrittsrohr 16 abpumpt. Während der Absetz- und Nachklärphase wird die Klarwasser-Entnahmepumpe 28 jeweils mehrmals für kurze Pumpenstöße eingeschaltet, so daß die an die Pumpe anschließende Druckleitung in ihrem senkrechten Abschnitt mit Wasser gefüllt wird.

Während das Wasser in dieser Wassersäule anschließend durch die Pumpenkammer zurückläuft, werden Schlammpartikel aus der Pumpe ausgetragen. Die Pumpe wird also gewissermaßen einmal oder mehrmals gespült. Die Pumpenstöße sind so angesetzt, daß kein Wasser aus der Anlage austreten kann. Für die in der Zeichnung dargestellte Ausführungsform bedeutet dies, daß bei den Pumpenstößen nicht mehr Wasser zu fördern ist, als der senkrechte Abschnitt 30 der Druckleitung aufnimmt. Dieser Abschnitt der Druckleitung kann so dimensioniert werden, daß er eine ausreichende Spülwassermenge zur Reinigung der Pumpe aufnehmen kann.

Besonders wirksam ist die Spülung mit der Klarwasser-Entnahmepumpe nach dem erfindungsgemäßen Verfahren gegen Ende der Absetz- und Nachklärphase, da hier bereits weitgehend sauberes Wasser für die Spülung der Klarwasser-Entnahmepumpe zur Verfügung steht. Eine gewisse Reinigung ergibt sich jedoch auch zu Beginn der Absetz- und Nachklärphase oder sogar während der Belebungsphase. Die Anzahl der Spülvorgänge und die Zeitpunkte, an denen diese stattfinden, können nach Bedarf festgelegt werden.

## Patentansprüche

1. Verfahren zum Betreiben einer Kläranlage, insbesondere Einbecken-Kläranlage, in der nach einer Belebungsphase eine Absetz- und Nachklärphase stattfindet, mit einer Klarwasser-Entnahmepumpe zur Entnahme des Klarwassers im Anschluß an die Absetz- und Nachklärphase, **dadurch gekennzeichnet, daß** die Klarwasser-Entnahmepumpe insbesondere während der Absetz- und Nachklärphase wenigstens für einen kurzen Pumpenstoß eingeschaltet wird, so daß die Pumpe Wasser in einen ansteigenden Abschnitt einer auf der Druckseite der Pumpe anschließenden Druckleitung pumpt, das nach dem Pumpenstoß durch die Pumpe in das Becken der Anlage zurückläuft.

2. Kläranlage mit einer Klarwasser-Entnahmepumpe (28), **dadurch gekennzeichnet, daß** die Klarwasser-Entnahmepumpe (28) derart steuerbar ist, daß insbesondere während der Absetz- und Nachklärphase wenigstens für einen kurzen Pumpenstoß eingeschaltet wird, und dadurch Wasser in einen ansteigenden Abschnitt einer auf der Druckseite der Pumpe (28) in ein aus der Kläranlage herausgeführten Austrittsrohr mündenden Druckleitung (30) gepumpt wird, das nach dem Pumpenstoß durch die Pumpe (28) in das Becken (10) der Anlage zurückläuft.

## Claims

1. Process for operating a clarification plant, especially a single-basin clarification plant, in which a settling and after-clarification stage takes place after an activation stage, having a clarified water removal pump for removing the clarified water after the settling and after-clarification stage, **characterised in that** the clarified water removal pump is switched on at least for a short pump pulse, especially during the settling and after-clarification stage, so that the pump pumps water into a rising portion of a delivery line which adjoins the pump on the delivery side, and the water runs back through the pump and into the basin of the plant after the pump pulse.

2. Clarification plant having a clarified water removal pump (28), **characterised in that** the clarified water removal pump (28) is controllable in such a manner that, especially during the settling and after-clarification stage, switching on occurs at least for a short pump pulse and water is thereby pumped into a rising portion of a delivery line (30) leading, on the delivery side of the pump (28), into an outlet pipe guided out of the clarification plant, and the water runs back through the pump (28) and into the basin (10) of the plant after the pump pulse.

## Revendications

1. Procédé d'exploitation d'une station d'épuration des eaux, en particulier d'une station d'épuration des eaux à un bassin, dans laquelle une phase de décantation et de décantation secondaire a lieu, après une phase d'épuration par boues activées, avec une pompe d'extraction d'eau clarifiée, pour extraire l'eau clarifiée suite à la phase de décantation et de décantation secondaire, **caractérisé en ce que** la pompe d'extraction d'eau clarifiée est mise en circuit, en particulier pendant la phase de décantation et de décantation secondaire, au moins pour une courte impulsion de pompage, de sorte que la pompe pompe de l'eau dans une section montante d'une conduite d'alimentation adjacente, sur le côté refoulement de la pompe, eau qui repart dans le bassin de la station, après l'impulsion de pompage, donnée par la pompe.

2. Station d'épuration des eaux avec une pompe d'extraction d'eau clarifiée (28), **caractérisée en ce que** la pompe d'extraction d'eau clarifiée (28) peut être commandée de telle sorte qu'en particulier pendant la phase de décantation et de décantation secondaire, elle est mise en circuit au moins pour une courte impulsion de pompage et que de l'eau est pompée, ainsi, dans une section montante d'une conduite d'alimentation (30) qui débouche, côté refoulement de la pompe (28), dans un tuyau de sortie, menant à l'extérieur de la station d'épuration des eaux, eau qui repart dans le bassin (10) de la station, après l'impulsion de pompage, donnée par la pompe (28).
